# EUROPÄISCHE PATENTANMELDUNG

(11) **EP 1 914 185 A1**
(43) Veröffentlichungstag der Anmeldung: **23.04.2008**
(21) Anmeldenummer: 07115740.8
(22) Anmeldetag: 05.09.2007
(51) Int. Cl.: B65H 20/16, B65H 23/10, F16H 25/20

(54) **Vorrichtung zur Behandlung einer Warenbahn**

(30) Priorität: 20.10.2006 DE 202006016114 U
(71) Anmelder: Brückner Trockentechnik GmbH & Co. KG, 71229 Leonberg (DE)
(72) Erfinder: Straube, Roland, 70619 Stuttgart (DE)
(74) Vertreter: Tetzner, Michael

(57) **Zusammenfassung**

Die Erfindung betrifft eine Vorrichtung zur Behandlung einer Warenbahn (1) mit einer Transporteinrichtung (2), welche die Warenbahn (1) an ihren seitlichen Rändern (10,11) erfasst und im breitgespannten Zustand durch die Vorrichtung transportiert sowie einer Breitenverstelleinrichtung (3), mit der die Arbeitsbreite der Transporteinrichtung auf die Breite der Warenbahn eingestellt werden kann, wobei die Breitenverstelleinrichtung ein oder mehrere Gewindespindeln (30) umfasst und jede Gewindespindel wenigstens eine, vorzugsweise zwei Muttern (41,42) aufweist, die mit der Transporteinrichtung derart in Verbindung stehen, dass eine Drehung der Gewindespindel in die eine Richtung eine Vergrößerung der Arbeitsbreite und eine Drehung der Gewindespindel in die andere Richtung eine Verkleinerung der Arbeitsbreite der Transporteinrichtung bewirkt. Die Mutter (41,42) besteht aus einem Träger (43) und einem im Träger gehalterten Einsatz (46), wobei der Einsatz durch zwei Halbschalen (47,48) gebildet wird, die im zusammengefügten Zustand ein mit der Gewindespindel (30) zusammenwirkendes Innengewinde (49) aufweisen.

## Beschreibung

Die Erfindung betrifft eine Vorrichtung zur Behandlung einer Warenbahn mit einer Transporteinrichtung, welche die Warenbahn an ihren seitlichen Rändern erfasst und im breitgespannten Zustand durch die Vorrichtung transportiert sowie einer Breitenverstelleinrichtung mit der die Arbeitsbreite der Transporteinrichtung auf die Breite der Warenbahn eingestellt werden kann.

Aus der Praxis sind Breitenverstelleinrichtungen für diesen Zweck bekannt, die ein oder mehrere Gewindespindeln umfassen, wobei jede Gewindespindel wenigstens eine, vorzugsweise zwei Muttern aufweisen, die mit der Transporteinrichtung derart in Verbindung stehen, dass eine Drehung der Gewindespindel in die eine Richtung eine Vergrößerung der Arbeitsbreite und eine Drehung in die andere Richtung eine Verkleinerung der Arbeitsbreite der Transporteinrichtung bewirkt. Bedingt durch die vorherrschenden Umgehungsparameter, wie die hohen Temperaturen von bis zu 240°C, starken Verschmutzungen durch Warenpartikel und Appreturkondensatrückständen sind ein hoher Verschleiß und ein hoher Wartungsaufwand unumgänglich.

Aus der DE 83 21 781 U1 ist eine Verstellspindel für den Einbau in eine Spannrahmen-Wärmebehandlungsmaschine bekannt, dessen Mutter zweiteilig ausgebildet ist, wodurch eine einfache Montage und Demontage ermöglicht wird.

Der Erfindung liegt nun die Aufgabe zugrunde, die Breitenverstelleinrichtung zu schaffen, die insbesondere eine schmiermittelfreie Verstellung der Muttern und eine einfache Montage und Demontage ermöglicht.

Erfindungsgemäß wird diese Aufgabe durch die Merkmale des Anspruches 1 gelöst.

Die erfindungsgemäße Vorrichtung zur Behandlung einer Warenbahn besteht im Wesentlichen aus einer Transporteinrichtung, welche die Warenbahn an ihren seitlichen Rändern erfasst und im breitgespannten Zustand durch die Vorrichtung transportiert sowie einer Breitenverstelleinrichtung, mit der die Arbeitsbreite der Transporteinrichtung auf die Breite der Warenbahn eingestellt werden kann, wobei die Breitenverstelleinrichtung ein oder mehrere Gewindespindeln umfasst und jede Gewindespindel wenigstens eine, vorzugsweise zwei Muttern aufweist, die mit der Transportrichtung derart in Verbindung stehen, dass eine Drehung der Gewindespindel in die eine Richtung eine Vergrößerung der Arbeitsbreite und eine Drehung der Gewindespindel in die andere Richtung eine Verkleinerung der Arbeitsbreite der Transporteinrichtung bewirkt. Die Mutter besteht aus einem Träger und einem im Träger gehalterten Einsatz, wobei der Einsatz durch zwei Halbschalen gebildet wird, die im zusammengefügten Zustand ein mit der Gewindespindel zusammenwirkendes Innengewinde aufweisen.

Nachdem die Mutter aus einem Träger und einem Einsatz besteht, kann für die beiden Halbschalen des Einsatzes ein anderes Material als für den Träger, eingesetzt werden, sodass eine schmiermittelfreie Verstellung der Muttern ermöglicht wird.

Der Träger besteht insbesondere aus Gussmaterial, wobei Grauguss bevorzugt wird. Auch der Träger besteht vorzugsweise aus zwei Halbschalen, die im zusammengefügten Zustand einen eckigen, insbesondere einen sechseckigen Querschnitt aufweisen können. Bei der Montage der Mutter werden die beiden Halbschalen des Einsatzes über Passfedern in den Halbschalen des Trägers gesichert. Anschließend werden die beiden Halbschalen des Trägers miteinander verschraubt.

Entspricht der Träger in seinen äußeren Abmessungen den bisher verwendeten Muttern, können bei anstehenden Wartungsarbeiten auf einfacher Art und Weise die erfindungsgemäßen Muttern eingebaut werden.

Da die Gewindespindel sowohl in ihrer Herstellung, als auch durch ihren Montageaufwand das deutlich teurere Bauteil ist, wird die Mutter als Verschleißteil angesehen. Durch die zweiteilige Ausbildung des Einsatzes ist es möglich den Einsatz der Mutter auszutauschen ohne dabei die Gewindestange ausbauen zu müssen, sodass sich die Zeit für die Wartung deutlich verkürzt. Bei Wartungsarbeiten ist lediglich der Träger zu öffnen und der Einsatz kann auf einfache Art und Weise auf Schäden überprüft und ggf. ausgetauscht werden.

Weitere Vorteile und Ausgestaltungen der Erfindung werden im Folgenden anhand der Beschreibung und der Zeichnung näher erläutert.

In der Zeichnung zeigen
- Fig. 1: eine schematische Darstellung der Vorrichtung zur Behandlung einer Warenbahn mit Transporteinrichtung und Breitenverstelleinrichtung,

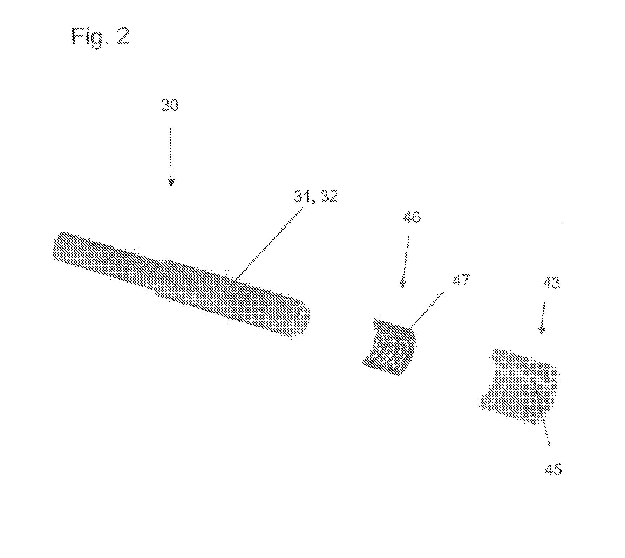

- Fig. 2: eine dreidimensionale Darstellung der Gewindespindel mit Mutter,
- Fig. 3: eine Vorderansicht der Mutter,
- Fig. 4: eine Seitenansicht der Mutter,
- Fig. 5: eine Schnittdarstellung längs der Linie B-B der Fig. 3,
- Fig. 6: eine Schnittdarstellung längs der Linie A-A der Fig. 4.

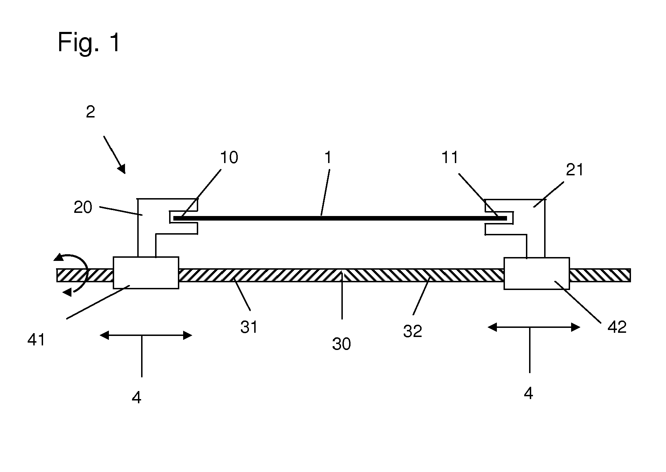

Die in Fig. 1 dargestellte Vorrichtung zur Behandlung einer Warenbahn 1 weist eine Transporteinrichtung 2 auf, die an den beiden in Transportrichtung verlaufenden seitlichen Rändern 10, 11 der Warenbahn jeweils einen Antriebstrang 20, 21 umfasst. Die beiden Antriebstränge 20, 21 sind beispielsweise als umlaufende Ketten ausgebildet, die über geeignete Klemmmittel die Ränder 10, 11 der Warenbahn 1 erfassen, um die Warenbahn im breitgespannten Zustand durch die Vorrichtung zu transportieren.

Weiterhin ist eine Breitenverstelleinrichtung 3 vorgesehen, die vorzugsweise mehrere, in Transportrichtung hintereinander angeordnete Gewindespindel 30 umfasst, die mit jeweils einer, vorzugsweise zwei Muttern 41, 42 zusammenwirkt.

Die Gewindespindel 30 ist in geeigneter Weise gelagert und in beiden Drehrichtungen antreibbar. Im dargestellten Ausführungsbeispiel weist die Gewindespindel 30 auf ihrer einen Seite ein rechtsgängiges Gewinde 31 und auf ihrer anderen Seite ein linksgängiges Gewinde 32 auf. Die Muttern 41, 42 sind mit entsprechend ausgebildeten Innengewinden versehen und wirken mit der Gewindespindel 30 derart zusammen, dass sich die beiden Muttern 41, 42 bei der einen Drehrichtung der Gewindespindel aufeinander zu bewegen und bei der anderen Drehrichtung voneinander weg bewegen (siehe Doppelpfeil 4).

Die Muttern 41, 42 sind mit der Transporteinrichtung 2 derart gekoppelt, dass die Arbeitsbreite der Transporteinrichtung einstellbar ist. Zweckmäßigerweise sind die Muttern 41, 42 mit den beiden Transportsträngen 20, 21 verbunden und können somit die Transportstränge quer zur Transportrichtung an die gewünschte Arbeitsbreite anpassen.

Im Rahmen der Erfindung ist es aber auch denkbar, dass nur einer der beiden Transportstränge 20, 21 verschoben wird, während der andere feststehend ausgebildet ist.

Die Muttern 41, 42 bestehen jeweils aus einem Träger 43 und einem im Träger gehalterten Einsatz 46, wobei der Einsatz 46 aus zwei Halbschalen 47, 48 gebildet wird, die im zusammengefügten Zustand ein mit der Gewindespindel 30 zusammenwirkendes Innengewinde 49 aufweisen.

Die beiden Halbschalen 47, 48 des Einsatzes bestehen vorzugsweise aus einem Kunststoff, insbesondere einem temperaturbeständigen, hochfesten, getemperten Kunststoff, die im zusammengefügten Zustand einen Zylinder mit Innengewinde 49 bilden.

Der Träger 43 besteht vorzugsweise aus Gussmaterial, insbesondere Grauguss. Auch der Träger wird zweckmäßigerweise aus zwei Halbschalen 44, 45 gebildet, die im zusammengefügten Zustand einen eckigen, insbesondere sechseckigen Querschnitt aufweisen. Auf der Innenseite ist der Träger zylindrisch ausgebildet, sodass die beiden Halbschalen 47, 48 des Einsatzes im eingebauten Zustand an der Innenwandung des Trägers anliegen.

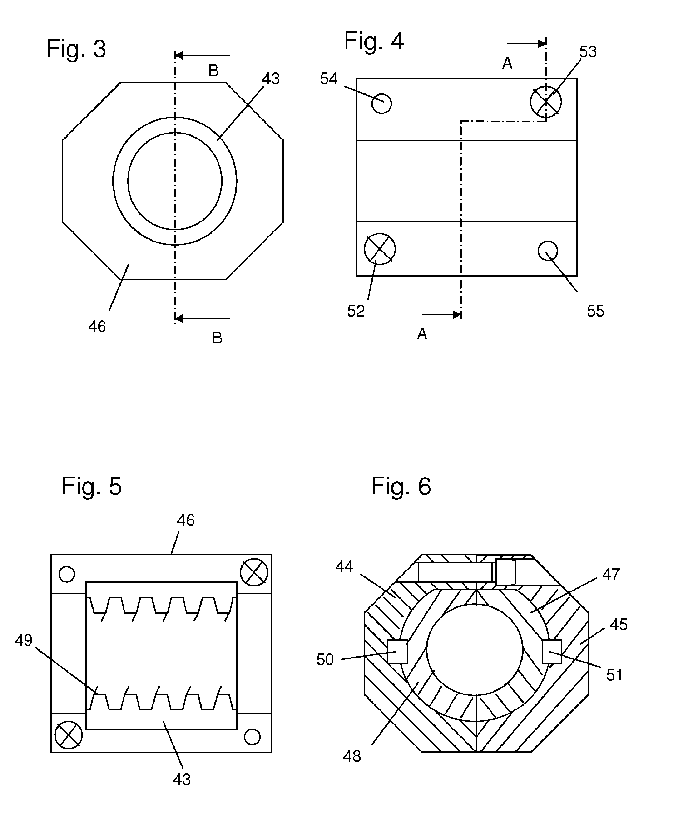

Jede Halbschale 47, 48 des Einsatzes wird zudem über eine Passfeder 50, 51 im Träger gesichert. Der Zusammenhalt der Mutter wird beispielsweise durch eine Verschraubung der beiden Halbschalen 44, 45 des Trägers bewirkt. Wie aus den Fig. 4 und Fig. 5 hervorgeht, sind für diesen Zweck zwei diagonal gegenüberliegend angeordnete Zylinderschrauben 52, 53 vorgesehen. In den gegenüberliegenden Ecken können Passstifte 54, 55 angeordnet werden.

Durch die Verwendung eines temperaturbeständigen, hochfesten Kunststoffs ist eine schmiermittelfreie Verstellung der Muttern möglich. Bei Wartungsarbeiten ist lediglich der Träger 43 zu öffnen und der Einsatz kann auf einfache Art und Weise auf Schäden überprüft und ggf. ausgetauscht werden.

Anstelle eines zweiteiligen Trägers wäre prinzipiell auch eine einteilige Ausführung denkbar, bei welcher der Träger eine Art Hülse bildet, die über den zusammengefügten Einsatz geschoben wird. Eine geeignete Verschraubung könnte dann die Verbindung zwischen Träger und Einsatz sicherstellen.

Bedingt durch die materialoptimierte Konstruktion des Einsatzes vereinfacht dieser zum einen durch die anderen durch sein geringes Gewicht das Materialhandling. Da üblicherweise nur das Kunststoffteil ausgewechselt werden muss, entstehen zudem geringere Kosten.

Wird der Träger 43 außerdem in seiner äußeren Form und seinen Abmessungen an die bisher verwendeten Mutter angepasst, kann die neue Mutter jeder Zeit in bestehenden Anlagen nachgerüstet werden, wobei als Träger auf beiden Seiten der Spindel das gleiche Modell zum Einsatz kommen kann.

## Patentansprüche

1. Vorrichtung zur Behandlung einer Warenbahn (1) mit einer Transporteinrichtung (2), welche die Warenbahn an ihren seitlichen Rändern (10, 11) erfasst und im breitgespannten Zustand durch die Vorrichtung transportiert sowie einer Breitenverstelleinrichtung (3), mit der die Arbeitsbreite der Transporteinrichtung auf die Breite der Warenbahn eingestellt werden kann, wobei die Breitenverstelleinrichtung ein oder mehrere Gewindespindeln (30) umfasst und jede Gewindespindel wenigstens eine, vorzugsweise zwei Muttern (41, 42) aufweist, die mit der Transporteinrichtung derart in Verbindung stehen, dass eine Drehung der Gewindespindel in die eine Richtung eine Vergrößerung der Arbeitsbreite und eine Drehung der Gewindespindel in die andere Richtung eine Verkleinerung der Arbeitsbreite der Transporteinrichtung bewirkt,
**dadurch gekennzeichnet, dass** die Mutter (41, 42) aus einem Träger (43) und einem im Träger gehalterten Einsatz (46) besteht, wobei der Einsatz durch zwei Halbschalen (47, 48) gebildet wird, die im zusammengefügten Zustand ein mit der Gewindespindel (30) zusammenwirkendes Innengewinde (49) aufweisen.

2. Vorrichtung nach Anspruch 1, **dadurch gekennzeichnet, dass** der Träger (43) und der Einsatz (47, 48) aus einem unterschiedlichen Material bestehen.

3. Vorrichtung nach Anspruch 1, **dadurch gekennzeichnet, dass** die beiden Halbschalen (46) des Einsatzes (46) aus Kunststoff bestehen.

4. Vorrichtung nach Anspruch 1, **dadurch gekennzeichnet, dass** die beiden Halbschalen (47, 48) des Einsatzes (46) im zusammengefügten Zustand einen Zylinder mit Innengewinde bilden.

5. Vorrichtung nach Anspruch 1, **dadurch gekennzeichnet, dass** der Träger (43) aus Gussmaterial, insbesondere Grauguss, besteht.

6. Vorrichtung nach Anspruch 1, **dadurch gekennzeichnet, dass** der Träger (43) ebenfalls aus zwei Halbschalen (44, 45) besteht.

7. Vorrichtung nach Anspruch 1, **dadurch gekennzeichnet, dass** die beiden zusammengefügten Halbschalen(44, 45) des Trägers (43) einen eckigen, insbesondere eine sechseckigen Querschnitt aufweisen.

8. Vorrichtung nach Anspruch 1, **dadurch gekennzeichnet, dass** die beiden Halbschalen (44, 45) des Trägers (43) im zusammengefügten Zustand verschraubt sind.

9. Vorrichtung nach Anspruch 1, **dadurch gekennzeichnet, dass** jede Halbschale (47, 48) des Einsatzes über eine Passfeder (50, 51) im Träger (43) gesichert ist.

10. Vorrichtung nach Anspruch 1, **dadurch gekennzeichnet, dass** die Gewindespindel (30) auf ihrer einen Seite mit einem rechtsgängigen Gewinde (31) und auf ihrer anderen Seite mit einem linksgängigen Gewinde (32) versehen ist und auf jeder Seite eine Mutter (41, 42) mit entsprechend ausgebildetem Innengewinde mit der Gewindespindel derart zusammenwirkt, dass sich die beiden Muttern bei der einen Drehrichtung der Gewindespindel aufeinander zu bewegen und bei der anderen Drehrichtung voneinander weg bewegen.
